Europäisches Patentamt

European Patent Office

Office européen des brevets

(19)

(11) Publication number: **0 064 396**
**B1**

(12) # EUROPEAN PATENT SPECIFICATION

(45) Date of publication of patent specification: **26.02.86**

(21) Application number: **82302218.1**

(22) Date of filing: **29.04.82**

(51) Int. Cl.⁴: **C 08 J 5/00, B 29 C 33/44, B 29 C 33/56, C 08 F 216/06**

(54) A method of producing shaped resinous articles and casting moulds for use in the method.

(30) Priority: **30.04.81 JP 66368/81**

(43) Date of publication of application:
**10.11.82 Bulletin 82/45**

(45) Publication of the grant of the patent:
**26.02.86 Bulletin 86/09**

(84) Designated Contracting States:
**DE FR GB**

(56) References cited:
**DD-A- 140 220**
**DE-C- 910 726**
**US-A-3 935 291**

(73) Proprietor: **KURARAY CO., LTD.**
**1621 Sakazu**
**Kurashiki-City Okayama Prefecture (JP)**

(72) Inventor: **Bando, Satoshi**
**1660 Sakazu**
**Kurashiki-city Okayama-Pref., 710 (JP)**
Inventor: **Tanii, Hirokuni**
**2-14-7 Hirosedai Kawai-cho**
**Kitakatsuragi-gun Nara-Pref., 636 (JP)**
Inventor: **Ohfuji, Yoshio**
**41 Higashimaruta-machi Kawabatahigashi-iru**
**Marutamachi-dori Sakyo-ku Kyoto-city 606 (JP)**

(74) Representative: **Crampton, Keith John Allen et al**
**D YOUNG & CO 10 Staple Inn**
**London WC1V 7RD (GB)**

Courier Press, Leamington Spa, England.

EP 0 064 396 B1

## Description

This invention relates to the production of shaped articles from a liquid curable resin and to moulds for use in this production.

The compressive strength, tensile strength and other properties of shaped articles moulded from liquid curable resins can be improved by incorporating additives such as fillers and reinforcing agents in the moulding composition. Moreover, filled and/or reinforced resin articles are highly resistant to acids and other chemicals. It is for these reasons that such articles have found application in a variety of fields. However, in the production of such shaped articles from a liquid curable resin, the conventional moulds made of metal, rubber, wood or FRP (fibrous-glass-reinforced plastics) present problems upon ejection of the article from the mould so that it has been difficult to produce in one operation a shaped article having a surface gloss that is satisfactory and even. For overcoming the above disadvantage, it has, for instance, previously been proposed to apply a mould-release agent such as wax, polyvinyl alcohol, or a silicone or fluorocarbon resin to the casting surface of the mould, or to use a mould made of silicone rubber with or without application of a mould-release agent. However, since none of the prior methods ensures satisfactory release of the article, the article cannot be easily removed from the mould. Moreover, if the article is partially released in an early stage of the curing process, it assumes an uneven surface gloss. It has thus been difficult to obtain a shaped resin article with a satisfactory even surface gloss.

Therefore, it has hitherto been necessary, in order to obtain a shaped article having a satisfactory even gloss, to buff or coat the surface of the moulded articles or apply to the surface of the mould a gel coating that contains little or no filler. However, these methods not only add to the production cost of the articles but, when coating or gel coating is used, the resin layer on the surface of the article detracts from the surface hardness and strength of the article.

A detailed analysis of the above-mentioned disadvantages of the moulding of liquid curable resins has shown that the surface-gloss characteristics of such moulded articles depend largely on the relationship between the resin and the casting surface of the mould. It is necessary that the casting surface of the mould and the resin be in intimate and inseparable contact throughout the curing reaction and be easily separable after completion of the curing reaction.

The liquid curable resin generally undergoes a large dimensional change, i.e. shrinkage or expansion, in the course of the curing reaction. Accordingly, it is necessary that the resin and the casting surface of the mould be in close contact throughout the curing reaction. However, in removing the article from the mould at the end of the moulding process, if the degree of this contact is too high, the article cannot easily be released from the mould and, if it be released with force, the surface of the article can be.damaged. Therefore, it has been necessary to develop a mould having a casting surface that would satisfy the two conflicting requirements.

(i) a high intimate contact throughout the moulding process; and
(ii) a satisfactory releasability at the time of ejection.

It has now been found that use of a mould having a coating surface comprising a vinyl alcohol-olefin copolymer can satisfy both of the above-mentioned conflicting requirements. Accordingly, the present invention provides a method of producing shaped articles exhibiting even surface gloss from a liquid curable resin by pouring the resin into and curing it in a mould having a casting surface made of a vinyl alcohol-olefin copolymer containing 40˙to 90 mole percent of vinyl alcohol and not containing more than 5.5 weight percent of water, and removing the resulting shaped article from the mould. ·

The vinyl alcohol-olefin copolymers used in accordance with the present invention preferably contain from 50 to 80 mole percent of the vinyl alcohol co-monomer. This range is desirable for ensuring satisfactory degrees of intimacy of contact and releasability. However, if the vinyl alcohol component exceeds 90 mole percent, the releasability will be excessive, i.e. the moulded article tends to be locally detached from the mould in an early stage of curing and also tends to give rise to an uneven gloss; whereas a vinyl alcohol content less than 40 mole percent would not ensure a satisfactory releasability, making it difficult to eject the article from the mould. The olefins component of the copolymer can be derived from any $C_{2-6}$ olefin, e.g. ethylene, propylene or a butylene, although ethylene is most desirable. Moreover, the copolymer can further contain small amounts of other suitable comonomers such as acrylic acid esters or methacrylic acid esters.

In accordance with the present invention, the mould has a casting surface made from a vinyl-alcohol-olefin copolymer. The mould need not be made, in its entirety, of such a copolymer but may be a laminated construction of the copolymer with another material. A mould of the type required can be fabricated by any of the following alternative methods: (i) the copolymer can be moulded into a mould, e.g. by injection moulding, extrusion moulding or press moulding; (ii) a sheet of the copolymer can be moulded into a mould, e.g. by vacuum moulding or compression moulding; (iii) a laminated sheet made up of the above copolymer as one lamina with the remaining laminae made from another thermoplastic polymer or polymers (e.g. polyvinyl chloride, polyethylene, polypropylene, polyamide or polyester) can be moulded into a mould, e.g. by vacuum moulding or compression moulding; and (iv) a mould or pattern of metal, wood or synthetic resin (e.g. polyvinyl chloride, polyethylene, polypropylene, polyamide, polyester or unsaturated polyester) can be lined with a sheet of the copolymer or by spraying or applying a copolymer dope over the casting surface of the pattern and drying it to give a copolymer film. Among these methods, methods (ii) and (iii) are suited for the manufacture of products having intricate shapes, while method (iv) is suitable for the manufacture of comparatively large articles. The thickness of the copolymeric coating surface is preferably within the range of 15 to 1000 μm. Vacuum moulding is an especially suitable method.

As another feature of this invention, the water content (dry basis) of the vinyl alcohol-olefin copolymer is not more than 5.5 weight percent and preferably not more than 4 weight percent. This feature is important in connection with the pouring of the liquid curable resin into the mould and the ejection of the article from the mould. The above limits, however, need not necessarily hold true during the curing reaction. For example, if a small amount of water is added to the liquid curable resin as a curing co-catalyst, then, even if the water content of the copolymer before pouring is adjusted to 5.5 weight percent or less, its water content may be increased beyond the recited limits after pouring. In such cases, it is necessary that the water content of the copolymer be reduced to 5.5 weight percent or less, for example by drying before ejection. If the water content of the vinyl alcohol-olefin copolymer is over 5.5 weight percent, the surface gloss of the article will be reduced. While the reason for this phenomenon is not clear, it is currently believed that the water contained in the vinyl alcohol-olefin copolymer exerts a plasticizing effect on the polymer and the water inhibits the curing reaction of the resin. Moreover, the low water content is desirable for increasing the number of times the mould can be reused. A water content of not more than 4 weight percent is especially desirable in that the mould will then be as serviceable and capable of yielding as neat an article as in the first moulding cycle, even after more than 10 moulding cycles. The water content of the vinyl alcohol-olefin copolymer can be controlled to the above-mentioned range of not more than 5.5 weight percent and preferably not more than 4 weight percent before use of the mould by various procedures such as drying in a dry air current at room temperature, drying under heating at atmospheric pressure or *in vacuo*, or drying in a hot air current. In the case of drying under heating, a higher heating temperature will result in a shorter drying time but the temperature should not be so high as to cause harmful results such as deformation and degradation of the mould.

The liquid curable resin used in accordance with this invention is a resin that is normally liquid before curing and is capable of curing, e.g. under the influence of a curing agent. Thus, for example, unsaturated polyester resins, unsaturated epoxy resins, and mixtures of vinyl monomers such as methyl methacrylate, styrene and vinyl toluene with the polymers derived from those monomers are suitable. These resins may contain other monomers capable of yielding cross-linked structures. Of such resins, the most desirable are low-shrinkage resins that will not show a volume reduction of more than 3 percent on curing. As examples of such low-shrinkage resins, there can be mentioned unsaturated polyester or unsaturated epoxy resins containing thermoplastic resins such as styrene polymers, methacrylate polymers, saturated polyester polymers and vinyl acetate polymers. Especially desirable are such low-shrinkage resins to which a dispersing agent has been added for improving the dispersibility and stability of the resin. Examples of such dispersing agents are disclosed in Japanese published Patent Applications Nos. 8058/77 and 74592/78. Thus, graft or block copolymers of styrene polymers with polyester or epoxy polymers can be mentioned by way of example.

In the practice of this invention, a filler can be added to the liquid curable resin, and the advantages of this invention are best exploited when such a filler is used. This is believed to be due to the fact that when a mould release is applied to the casting surface, as is conventional, the mould release tends to be removed from the surface of the mould by the friction between the filler and the mould at the time of pouring or curing, thus giving rise to an unsatisfactory surface gloss on the article. Examples of the filler include sand, silica, powders or particles of rocks, e.g. granite or marble, pulverizates of porcelain, glass and other ceramics, spherical particles such as glass balloons and silica balloons, and talc, mica, quartz powder, calcium carbonate, barium sulphate, aluminium oxide, iron oxide, aluminium hydroxide, and organic polymeric fibres, pulps and powders. These fillers are preferably used in the range 80 to 1000 parts, and for still better results in the range 120 to 700, parts by weight to each 100 parts by weight of the curable liquid resin.

The curing reaction of the liquid curable resin is generally effected with the aid of a curing agent. The curing agent can be one of the various catalysts commonly employed for polymerization and curing of liquid curable resins. For unsaturated polyester resins, unsaturated epoxy resins, and mixtures of vinyl monomers and polymers, suitable curing agents include methyl ethyl ketone peroxide, benzoyl peroxide, di-*t*-butyl peroxide, *t*-butyl perphthalate, maleic acid hemi-peresters and azobisisobutyronitrile. The amount of such curing agents used is preferably 0.1 to 6, and for still better results 0.5 to 4, parts by weight to each 100 parts by weight of the liquid curable resin.

In the practice of this invention, it is possible to incorporate in the moulding composition such additional components as may be considered necessary or useful, for example reinforcements such as glass fibre, metal-wire netting, steel wire, steel bar, punched steel sheet, piano wire or PC steel wire; accelerators such as cobalt naphthenate or dimethyl aniline; and other additives such as curing regulators, pigments, coloured fibres, ultraviolet absorbers and flame retardants.

The modes of practice of this invention will be described below in detail. First, the liquid curable resin is compounded, if necessary, with a filler, curing agent and other additives to prepare a moulding composition. The composition is poured into a mould having a casting surface made from a vinyl alcohol-olefin copolymer with a water content of not more than 5.5 weight % and preferably not more than 4 weight %. The resin composition is compacted, for example by vibration, and cured *in situ* at room temperature or under heating, followed by ejection of the article. By using pigments and fillers in suitable combinations, shaped articles of desired colours and patterns, including those resembling marble and granite, can be easily produced.

In accordance with this invention, it is easy to obtain a shaped article having a satisfactory and even surface gloss without using a mould-release agent or without forming a gel coating on the surface, or using other finishing operations. Therefore, the method is very useful for the production of articles that must be decorative, for example, building materials (e.g. floor and wall materials including tiles), and furniture and home equipment (e.g. table tops, counter tops, wash-basin tops, and bath tubs), as well as other products. Moreover, the mould can be used repeatedly because its casting surface does not easily pick up resin and, in fact, it can be reused for more than ten moulding cycles, thus contributing to economical production. The following examples are given to illustrate this invention in further detail. In these examples, all parts are by weight.

Example 1

A laminate consisting of a polyvinyl chloride sheet with a thickness of 500 μm and a vinyl alcohol-ethylene copolymer (vinyl alcohol content: 60 mole %) sheet with a thickness of 20 μm was preheated until it was softened. The laminate was then moulded under vacuum suction on an aluminium pattern provided with suction holes and cooled with water sprays to produce a mould 300 mm long, 300 mm wide and 10 mm deep and in which the casting surface comprised the vinyl-alcohol-ethylene copolymer lamina. This mould was dried in a dry air current to adjust the water content of the vinyl alcohol-ethylene copolymer to 2.5 weight %. A curable composition of Formula 1 indicated below was poured into the mould and compacted on a table vibrator (vibration frequency: 360 VPM; output: 200 W) for 5 minutes, after which time it was allowed to stand at room temperature (20°—25°C) for 24 hours. After this curing period, the shaped article was readily ejected from the mould. The shaped article thus obtained had a satisfactory and even surface gloss.

This mould was used repeatedly for 5 additional runs. Each of the resultant articles had a satisfactory surface gloss which was not different from that of the first article.

| | Formula 1 | |
|---|---|---|
| (1) | Orthophthalic-unsaturated polyester resin (unsaturated alkyd 60%) | 56 parts |
| (2) | Styrene monomer | 24 parts |
| (3) | Polystyrene in styrene (solids 30%) | 20 parts |
| (4) | Dispersing agent (Kuraray Co. Ltd., Kurapearl R-15, main component; a copolymer comprising styrene polymer as the main chain and polyester branch chains) | 2 parts |
| (5) | Curing agent (55% methyl ethyl ketone peroxide) | 1.5 parts |
| (6) | Accelerator (cobalt naphthenate solution, 6% Co) | 0.4 part |
| (7) | Calcium carbonate powder | 100 parts |
| (8) | Coloured ceramic powder (grain size 0.1—3 mm) | 400 parts |
| (9) | Pigment | 2 parts |

Example 2

A laminate of a polyvinyl chloride sheet with a thickness of 500 μm and a vinyl alcohol-ethylene copolymer (vinyl alcohol content: 70 mole %) sheet with a thickness of 20 μm was vacuum-moulded on a wooden pattern to fabricate a mould in which the casting surface comprised the vinyl alcohol-ethylene copolymer. The water content of the vinyl alcohol-ethylene copolymer of the mould thus formed was adjusted to 2.5 weight %. Then, a curable resin composition of Formula 2 indicated below was poured into the above mould and treated in the same manner as Example 1 to give a floor-tile-shaped article. This article could be easily ejected from the mould and had a satisfactory and even surface gloss.

Formula 2

| | | |
|---|---|---|
| (1) | Unsaturated epoxy resin (solids 60%) | 55 parts |
| (2) | Styrene monomer | 20 parts |
| (3) | Polystyrene in styrene (solids 30%) | 25 parts |
| (4) | Dispersing agent (Kuraray Co. Ltd., Kurapeal S-25) | 2 parts |
| (5) | Curing agent (55% methyl ethyl ketone peroxide) | 2 parts |
| (6) | Accelerator (cobalt naphthenate solution, 6% Co) | 0.5 part |
| (7) | Coloured ceramic powder (grain size: 0.1—3 mm) | 430 parts |
| (8) | Talc | 80 parts |

Example 3

In the same manner as Example 1, a laminate of a polyvinyl chloride sheet with a thickness of 500 μm and a vinyl alcohol-ethylene copolymer (vinyl alcohol content 60 mole %) sheet with a thickness of 20 μm was suction-moulded to fabricate a mould measuring 300 mm long, 300 mm wide and 10 mm deep, in which the casting surface comprised the vinyl alcohol-ethylene copolymer. After the mould had been cooled with water sprays, water drops were wiped off with gauze. The water content of the vinyl alcohol-ethylene copolymer in this mould was 6.3 weight %. Without drying the mould, a curable composition of Formula 1 was poured into the mould and treated exactly in the same manner as Example 1. The resultant article had a surface gloss generally slightly inferior to that of the article produced in Example 1.

Example for Comparison 1

An aluminium pattern measuring 300 mm long, 300 mm wide and 10 mm deep was lined with a polyvinyl alcohol sheet with a thickness of 50 μm and the polyvinyl alcohol sheet lining was dried in a hot current of air to adjust its moisture content to 3.0 weight %. A curable resin composition of Formula 1 was then moulded in the above mould in the same manner as in Example 1. The resultant article was locally released from the mould spontaneously in a stage of incomplete curing. After 24 hours of curing, the parts of the article that had been in intimate contact with the mould could be released neatly and easily. However, the surface gloss of the ejected article was generally less satisfactory than that of the article according to Example 1 and the surfaces that had been spontaneously prematurely released at the stage of incomplete curing were found to lack gloss and to be uneven in appearance.

Example 4

An aluminium mould measuring 200 mm long, 200 mm wide and 20 mm deep was lined with a vinyl alcohol-ethylene copolymer (vinyl alcohol content: 70 mole %) sheet with a thickness of 20 μm. The resulting mould was preheated in dry air at 40°C to adjust the water content of the vinyl alcohol-ethylene copolymer to 1.5 weight %. A curable resin composition of Formula 3 given below was poured into the mould and cured at 40°C for 6 hours and then at 80°C for 2 hours. The article was ejected from the mould. The water content of the vinyl alcohol ethylene copolymer at ejection was 2.5 weight %. The ejection of the article was smooth and the article had a satisfactory and even gloss all over its surface.

**Formula 3**

| | | | |
|---|---|---|---|
| (1) | Polymethylmethacrylate syrup (30% homopolymer/70% monomer) | | 100 parts |
| (2) | Aluminium hydroxide powder | | 150 parts |
| (3) | Coloured ceramic powder (grain size 0.5 to 3 mm) | | 80 parts |
| (4) | Curing agent (t-butyl peroxymaleate) | | 2 parts |
| (5) | Calcium hydroxide | | 0.8 part |
| (6) | Water | | 0.25 part |
| (7) | Ethylene glycol dimercaptoacetate | | 0.25 part |

Example 5

A dry wooden pattern was provided with an enclosure having a packing space measuring 200 mm long, 200 mm wide and 7 mm deep to the surface of which was affixed a vinyl alcohol-ethylene copolymer (vinyl alcohol content 70 mole %) sheet 25 μm thick and dried to a water content of 1.5 weight percent. The curable resin composition of Formula 4 indicated below was filled into the packing space and compacted on a table vibrator (3600 VPM and an output of 200 W) for 5 minutes, after which it was allowed to stand at room temperature (15—20°C) for 24 hours. After this curing period, the enclosure was removed and the article was taken out. The releasability of the moulded surface held in contact with the vinyl alcohol-ethylene copolymer sheet was satisfactory and the shaped article had a very good and even surface gloss which imparted a granite stone-like appearance to the article.

**Formula 4**

| | | | |
|---|---|---|---|
| (1) | Polymethyl methacrylate syrup (30% homopolymer/70% monomer, N,N-dimethylaniline 0.3%) | | 100 parts |
| (2) | Benzoyl peroxide | | 0.7 parts |
| (3) | Black ceramic powder (grain size 0.1 to 3 mm) | | 80 parts |
| (4) | White ceramic powder (grain size 0.1 to 3 mm) | | 240 parts |
| (5) | Finely divided silica (grain size 0.1 mm or less) | | 80 parts |

Example for Comparison 2

Using the curable resin composition of Formula 4, the procedure of Example 5 was repeated except that a polyvinyl alcohol sheet with a thickness of 50 μm was used in lieu of the vinyl alcohol-ethylene copolymer sheet to produce a shaped article. The releasability of the moulded surface held in contact with the polyvinyl alcohol sheet was satisfactory but the marginal surface area of the article exhibited poor gloss, thus presenting an uneven appearance.

Example 6

The procedure of Example 1 was repeated except that a curable resin composition of Formula 5 below was used in lieu of the composition of Formula 1. The releasability of the resultant shaped article was satisfactory and the article had a satisfactory and even surface gloss, presenting a polished marble-like appearance.

**Formula 5**

| | | | |
|---|---|---|---|
| (1) | Polymethyl methacrylate syrup (30% homopolymer/70% monomer, N,N-dimethylaniline 0.3%) | | 100 parts |
| (2) | Benzoyl peroxide | | 0.8 part |
| (3) | Aluminium hydroxide powder | | 170 parts |

Example 7

A laminate of a polyvinyl chloride sheet with a thickness of 350 μm and a vinyl alcohol-ethylene copolymer (vinyl alcohol content 60 mole %) sheet with a thickness of 20 μm was affixed to a wooden pattern measuring 600 mm long, 1200 mm wide and 20 mm deep and having rounded corners in such a fashion that the vinyl alcohol-ethylene copolymer comprised the coating surface. A punched steel plate with a thickness of 0.6 mm was disposed in the centre of the pattern. The composition of Formula 1 was poured in in the same manner as in Example 1 to obtain a shaped article. This article had a satisfactory and even surface gloss.

**Claims**

1. A method for producing a shaped article exhibiting even surface gloss comprising pouring a liquid curable resin into a mould, curing the resin in the mould and removing the resulting shaped resinous article, characterized in that the mould has a casting surface comprising a vinyl alcohol-olefin copolymer containing 40 to 90 mole percent of vinyl alcohol, and not containing more than 5.5 weight percent of water.

2. A method as claimed in claim 1, in which the liquid curable resin contains a filler.

3. A method as claimed in claim 2, in which the amount of filler used is 80 to 1000 parts by weight per 100 parts by weight of the liquid curable resin.

4. A method as claimed in any one of claims 1 to 3, in which the liquid curable resin is an unsaturated polyester resin, an unsaturated epoxy resin, or a mixture of vinyl monomers with polymers of vinyl monomers.

5. A method as claimed in any one of claims 1 to 3, in which the liquid curable resin is a low-shrinkage resin having a cure volume reduction rate of not more than 3 percent.

6. A method as claimed in any one of claims 1 to 3, in which the liquid curable resin is an unsaturated polyester resin containing a thermoplastic resin.

7. A method as claimed in any one of claims 1 to 3, in which the liquid curable resin is an unsaturated epoxy resin containing a thermoplastic resin.

8. A method as claimed in claim 6 or 7, in which the thermoplastic resin is a styrene polymer, a methacrylate polymer, a saturated polyester polymer or a vinyl acetate polymer.

9. A method as claimed in any one of claims 1 to 3, in which the liquid curable resin is an unsaturated polyester of unsaturated epoxy resin containing a thermoplastic resin and a dispersing agent.

10. A method as claimed in any one of claims 1 to 3, in which the liquid curable resin is a mixture of methyl methacrylate and polymethyl methacrylate.

11. A method as claimed in any preceding claim, in which the vinyl alcohol-olefin copolymer is a vinyl alcohol-ethylene copolymer.

12. A method as claimed in any one of claims 1 to 11, in which the mould comprises a laminate of two or more polymers with its casting surface comprising the said vinyl alcohol-olefin copolymer.

13. A method as claimed in any one of claims 1 to 11, in which the mould is made entirely of the vinyl alcohol-olefin copolymer containing 40 to 90 mole percent of vinyl alcohol and not containing from than 5.5 weight percent of water.

14. A method as claimed in any preceding claim, in which the vinyl alcohol-olefin copolymer has a water content of not more than 4 weight percent.

15. A mould for forming shaped resinous articles, characterized in that it has a casting surface comprising a vinyl alcohol-olefin copolymer containing 40 to 90 mole percent of vinyl alcohol and not containing more than 5.5 weight percent of water.

16. A mould as claimed in claim 15, in which the vinyl alcohol-olefin copolymer is a vinyl alcohol-ethylene copolymer.

17. A mould as claimed in claim 15 or 16 in the form of a laminate comprising two or more polymeric laminae with the casting surface comprising a vinyl alcohol-olefin copolymeric lamina containing 40 to 90 mole percent of vinyl alcohol and not containing more than 5.5 weight percent of water.

18. A mould as claimed in claim 15 or 16 made wholly of a vinyl alcohol-olefin copolymer containing 40 to 90 mole percent of vinyl alcohol.

19. A mould as claimed in claim 17 fabricated by vacuum-forming a laminated sheet made of two or more polymers and having a surface made of a vinyl alcohol-olefin copolymer containing 40 to 90 mole percent of vinyl alcohol.

20. A mould as claimed in claim 17 or 19, in which the vinyl alcohol-olefin copolymer lamina has a thickness of 15 to 1000 μm.

**Patentansprüche**

1. Verfahren zur Herstellung eines Formkörpers, der gleichmäßigen Oberflächenglanz aufweist, gemäß dem ein flüssiges härtbares Harz in eine Form gegossen, das Harz in der Form gehärtet und der gebildete Harz-Formkörper entnommen wird, dadurch gekennzeichnet, daß die Form eine Formoberfläche besitzt, die ein Vinylalkohol-Olefin-Copolymeres mit einem Gehalt an 40 bis 90 Mol.-% Vinylalkohol umfaßt und nicht mehr als 5,5 Gew.-% Wasser enthält.

2. Verfahren nach Anspruch 1, bei dem das flüssige härtbare Harz einen Füllstoff enthält.

3. Verfahren nach Anspruch 2, bei dem die Menge des verwendeten Füllstoffes 80 bis 1000 Gew.-Teile pro 100 Gew.-Teile des flüssigen härtbaren Harzes beträgt.

4. Verfahren nach einem der Ansprüche 1 bis 3, bei dem das flüssige härtbare Harz ein ungesättigtes Polyesterharz, ein ungesättigtes Epoxyharz oder ein Gemisch aus Vinylmonomeren mit Polymeren von Vinylmonomeren ist.

5. Verfahren nach einem der Ansprüche 1 bis 3, bei dem das flüssige härtbare Harz ein Harz mit niederer Schrumpfung ist, dessen Volumenverminderungsrate bei der Härtung nicht mehr als 3% beträgt.

6. Verfahren nach einem der Ansprüche 1 bis 3, bei dem das flüssige härtbare Harz ein ungesättigtes Polyesterharz ist, das ein thermoplastisches Harz enthält.

7. Verfahren nach einem der Ansprüche 1 bis 3, bei dem das flüssige härtbare Harz ein ungesättigtes Epoxyharz ist, das ein thermoplastisches Harz enthält.

8. Verfahren nach Anspruch 6 oder 7, bei dem das thermoplastische Harz ein Styrol-Polymeres, ein Methacrylat-Polymeres, ein gesättigter Polyester oder ein Vinylacetat-Polymeres ist.

9. Verfahren nach einem der Ansprüche 1 bis 3, bei dem das flüssige härtbare Harz ein ungesättigter Polyester eines ungesättigten Epoxyharzes ist, der ein thermoplastisches Harz und ein Dispergiermittel enthält.

10. Verfahren nach einem der Ansprüche 1 bis 3, bei dem das flüssige härtbare Harz ein Gemisch aus Methylmethacrylat und Polymethylmethacrylat ist.

11. Verfahren nach einem der vorhergehenden Ansprüche, bei dem das Vinylalkohol-Olefin-Copolymere ein Vinylalkohol-Ethylen-Copolymeres ist.

12. Verfahren nach einem der Ansprüche 1 bis 11, bei dem die Form ein Laminat aus zwei oder mehr Polymeren umfaßt, wobei die Formoberfläche das Vinylalkohol-Olefin-Copolymere enthält.

13. Verfahren nach einem der Ansprüche 1 bis 11, bei dem die Form vollständig aus dem Vinylalkohol-Olefin-Copolymeren mit einem Gehalt an 40 bis 90 Mol.-% Vinylalkohol, das nicht mehr als 5,5 Gew.-% Wasser enthält, besteht.

14. Verfahren nach einem der vorhergehenden Ansprüche, bei dem das Vinylalkohol-Olefin-Copolymere einen Wassergehalt von nicht mehr als 4 Gew.-% hat.

15. Form für die Formung von Harz-Formkörpern, dadurch gekennzeichnet, daß sie eine Formoberfläche hat, die ein Vinylalkohol-Olefin-Copolymeres mit einem Gehalt an 40 bis 90 Mol.-% Vinylalkohol, das nicht mehr als 5,5 Gew.-% Wasser- enthält, umfaßt.

16. Form nach Anspruch 15, in der das Vinylalkohol-Olefin-Copolymere ein Vinylalkohol-Ethylen-Copolymeres ist.

17. Form nach Anspruch 15 oder 16 in Form eines Laminats, das zwei oder mehr Polymerschichten umfaßt, wobei die Formoberfläche eine Schicht aus einem Vinylalkohol-Olefin-Copolymeren mit einem Gehalt von 40 bis 90 Mol.-% Vinylalkohol, das nicht mehr als 5,5 Gew.-% Wasser enthält, umfaßt.

18. Form nach Anspruch 15 oder 16, die vollständig aus einem Vinylalkohol-Olefin-Copolymeren mit einem Gehalt an 40 bis 90 Mol.-% Vinylalkohol gebildet ist.

19. Form nach Anspruch 17, hergestellt durch Vakuumverformen einer Laminatplatte aus zwei oder mehr Polymeren, die eine Oberfläche aus einem Vinylalkohol-Olefin-Copolymeren mit einem Gehalt an 40 bis 90 Mol.-% Vinylalkohol besitzt.

20. Form nach Anspruch 17 oder 19, in der die Schicht aus dem Vinylalkohol-Olefin-Copolymeren eine Dicke von 15 bis 1000 μm hat.

**Revendications**

1. Procédé de production d'un article moulé offrant un brillant superficiel régulier, selon lequel on verse une résine liquide durcissable dans un moule, on durcit la résine dans le moule et l'on enlève l'article moulé en résine résultant, caractérisé en ce que le moule a une surface de moulage comprenant un copolymère d'alcool vinylique-oléfine contenant 40 à 90% en moles d'alcool vinylique et pas plus de 5,5% en poids d'eau.

2. Procédé suivant la revendication 1, caractérisé en ce que la résine liquide durcissable renferme une charge.

3. Procédé suivant la revendication 2, caractérisé en ce que la quantité de charge utilisée est de 80 à 1000 parties en poids pour 100 parties en poids de la résine liquide durcissable.

4. Procédé suivant l'une quelconque des revendications 1 à 3, caractérisé en ce que la résine liquide durcissable est une résine polyester insaturé, une résine époxy insaturée, ou un mélange de monomères vinyliques et de polymères de monomères vinyliques.

5. Procédé suivant l'une quelconque des revendications 1 à 3, caractérisé en ce que la résine liquide durcissable est une résine à faible retrait, présentant lors du durcissement un taux de réduction ne dépassant pas 3% en volume.

6. Procédé suivant l'une quelconque des revendications 1 à 3, caractérisé en ce que la résine liquide durcissable est une résine polyester insaturé contenant une résine thermoplastique.

8

**0 064 396**

7. Procédé suivant l'une quelconque des revendications 1 à 3, caractérisé en ce que la résine liquide durcissable est une résine époxy insaturée contenant une résine thermoplastique.

8. Procédé suivant la revendication 6 ou 7, caractérisé en ce que la résine thermoplastique est un polymère de styrène, un polymère méthacrylique, un polymère de polyester insaturé ou un polymère d'acétate de vinyle.

9. Procédé suivant l'une quelconque des revendications 1 à 3, caractérisé en ce que la résine liquide durcissable est une résine polyester insaturé ou une résine époxy insaturée contenant une résine thermoplastique et un agent dispersant.

10. Procédé selon l'une quelconque des revendications 1 à 3, caractérisé en ce que la résine liquide durcissable comprend un mélange de méthacrylate de méthyle et de méthacrylate de polyméthyle.

11. Procédé selon l'une quelconque des revendications précédentes, caractérisé en ce que le copolymère d'alcool vinylique-oléfine est un copolymère d'alcool vinylique-éthylène.

12. Procédé selon l'une quelconque des revendications 1 à 11, caractérisé en ce que le moule comprend un feuilleté de deux ou de plusieurs polymères et que sa surface de moulage est constituée par le copolymère d'alcool vinylique-oléfine.

13. Procédé selon l'une quelconque des revendications 1 à 11, caractérisé en ce que le moule est entièrement constitué par le copolymère d'alcool vinylique-oléfine contenant 40 à 90% en moles d'alcool vinylique et pas plus de 5,5% en poids d'eau.

14. Procédé selon l'une quelconque des revendications précédentes, caractérisé en ce que le copolymère d'alcool vinylique-oléfine a une teneur en eau ne dépassant pas 4% en poids.

15. Moule pour former des articles moulés en résine, caractérisé en ce qu'il présente une surface de moulage comprenant un copolymère d'alcool vinylique-oléfine contenant 40 à 90% en moles d'alcool vinylique et pas plus de 5,5% en poids d'eau.

16. Moule suivant la revendication 15, caractérisé en ce que le copolymère d'alcool vinylique-oléfine est un copolymère d'alcool vinylique-éthylène.

17. Moule suivant la revendication 15 ou 16, caractérisé en ce qu'il est sous forme d'un produit feuilleté comprenant deux ou plusieurs feuilletés polymères, que sa surface de moulage comprend un feuillet de copolymère d'alcool vinylique-oléfine contenant 40 à 90% en moles d'alcool vinylique et ne contenant pas plus de 5,5% en poids d'eau.

18. Moule suivant la revendication 15 ou 16, caractérisé en ce qu'il est constitué complètement en copolymère d'alcool vinylique-oléfine contenant 40 à 90% en moles d'alcool vinylique.

19. Moule suivant la revendication 17, caractérisé en ce qu'on le forme sous vide à partir d'un produit feuilleté comprenant deux ou plusieurs polymères et qu'il a une surface en copolymère d'alcool vinylique-oléfine contenant 40 à 90% en moles d'alcool vinylique.

20. Moule suivant la revendication 17 ou 19, caractérisé en ce que le feuillet de copolymère d'alcool vinylique-oléfine a une épaisseur de 15 à 1000 microns.